# EUROPEAN PATENT APPLICATION

(11) **EP 4 661 267 A1**
(43) Date of publication of application: **10.12.2025**
(21) Application number: 25180200.5
(22) Date of filing: 02.06.2025
(51) Int. Cl.: H02M 1/088, H02M 1/32, H02M 7/5387

(54) **CONVERTER WITH PARALLEL SEMICONDUCTOR SWITCHES, METHOD TO IDENTIFY FAULTY SWITCH AND BLOW SWITCH OR SERIES FUSE WITH CURRENT DISTRIBUTED ON REMAINING CONVERTER LEGS**

(30) Priority: 05.06.2024 GB 202407962
(71) Applicant: Rolls-Royce Deutschland Ltd & Co KG, 15827 Blankenfelde-Mahlow (DE)
(72) Inventor: GAJANAYAKE, Chandana, 15827 Blankenfelde-Mahlow (DE); MOHAMED HALICK, Mohamed Sathik, 15827 Blankenfelde-Mahlow (DE); HO, Anh Vu, 15827 Blankenfelde-Mahlow (DE)

(57) **Abstract**

A power system that comprises a power bus (3, 4) comprising a first voltage rail (3) and a second voltage rail (4), and a power converter (6) arranged between the first voltage rail (3) and the second voltage rail (4). The power converter (6) comprises a plurality of switching units (S1-S6) which form at least two legs (61-63), each leg (61-63) comprising a top switching unit (S1, S3, S5) and a bottom switching unit (S2, S4, S6), wherein the switching units (S1-S6) each comprise a plurality of semiconductor switches (S11-S15, S21-S25, S31-S35, S41-S45, S51-S55, S61-S65) arranged in parallel. It is further provided a controller (5) configured to receive information or determine that one of the semiconductor switches of the switching units (S1-S6) has a fault condition. In such case, the controller (5) is further configured to control the switching units (S1-S6) such that the semiconductor switches (S11-S1, S21-S25) of the switching unit (S1, S2) that comprises the faulty semiconductor switch (S11, S21) are switched off at least intermittently, and the semiconductor switches (S31-S35, S41-S45, S51-S55, S61-S65) of at least one of the further switching units (S3-S6) are switched on, wherein a current is guided through the faulty semiconductor switch (S11, S21) and the semiconductor switches (S31-S35, S41-S45, S51-S55, S61-S65) of the at least one of the further switching units (S3-S6) to remove the faulty semiconductor switch (S11, S21).

## Description

### FIELD

The present disclosure relates a power system with a power converter and a method for servicing such power system in case of failure of a semiconductor switch.

### BACKGROUND

With increased penetration of electrical systems and the progression towards full electric and hybrid propulsion systems, the use of energy storage systems and power distribution has gained increased use. Multiple loads and sources may be connected to a distribution system such as a hybrid propulsion system. In such system, power converters such as inverters, rectifiers and DC/DC converters are needed for interfacing electrical propulsion motors, turbo generators, fuel cells and battery energy storage systems.

To improve power density there is a trend to move away from traditional power module-based power converter designs to power converter designs based on surface mounted device (SMD) type power devices which are mounted on a printed circuit board (PCB), wherein multiple power devices are connected in parallel to meet the power/current requirements. In particular, the switching units of the power converter may each comprise a plurality of semiconductor switches arranged in parallel. One disadvantage of such system with parallel semiconductor switches lies in that failure of one semiconductor switch can lead to a complete shutdown of the power converter and/or the complete power converter may become unusable.

There is a need to provide for a power system with a power converter that avoids that failure of one of a plurality of semiconductor switches arranged in parallel leads to failure of the complete power converter or at least provides a useful alternative to known power systems.

### SUMMARY

In a first aspect a power system is provided. The power system comprises a power bus, wherein the power bus comprises a first voltage rail and a second voltage rail, and a power converter arranged between the first voltage rail and the second voltage rail. The power converter comprises a plurality of switching units, wherein the switching units form at least two legs, each leg comprising a top switching unit connected to the first voltage rail and a bottom switching unit connected to the second voltage rail. Further, it is provided that the switching units each comprise a plurality of semiconductor switches arranged in parallel.

The power system further comprises a controller that is configured to receive information or determine that one of the semiconductor switches of the switching units has a fault condition. In such case, the controller is further configured to control the switching units such that the semiconductor switches of the switching unit that comprises the faulty semiconductor switch are switched off at least intermittently, and that the semiconductor switches of at least one of the further switching units are switched on, wherein a current is guided through the faulty semiconductor switch and the semiconductor switches of the at least one of the further switching units to remove the faulty semiconductor switch.

Aspects of the invention are thus based on the idea to address the problem of a faulty semiconductor switch by removing the faulty semiconductor switch in that a current is provided that burns the faulty semiconductor switch or an element arranged in series with the faulty semiconductor switch, thereby removing the faulty semiconductor switch from the power converter without damaging the other components in the system.

To this end, some of the power switches in the power converter are turned/switched on to transfer energy into the faulty semiconductor switch to overcome a short-circuit condition of the semiconductor switch and make the faulty semiconductor switch open circuit. As the semiconductor switches of the switching unit that comprises a faulty semiconductor switch are switched off, the current flows through the faulty semiconductor switch only, for which the switching off does not have an effect due to its faulty nature. At the same time, as the semiconductor switches of that switching unit are switched off, the healthy semiconductor switches are not affected by the operation.

Aspects of the present invention thus service a power system by removing a faulty semiconductor switch without damaging the other components, thereby allowing to bring the power system back into operation.

One further advantage associated with the present invention lies in that it can be implemented without needing additional switching units, using the components already present in the power converter for diagnosis and removal of a faulty semiconductor switch.

The fault that a faulty semiconductor switch may experience may be of different nature. For example, the fault may be that the semiconductor switch is short-circuited. In such case, after the faulty semiconductor switch has been burned, the current path through the faulty semiconductor switch is opened and no current is flowing through the faulty semiconductor switch anymore. In another example, the fault may be that the switching function of the semiconductor switch is impaired.

As mentioned, the switching units of the power converter form at least two legs. For example, in case of a power converter for motor drive applications (three-phase inverter or three-phase rectifier), the switching units form three legs. In another example, in a single phase AC converter application, the switching units form two legs.

The power bus generally connects a power source and a load.

In some embodiments, the controller is configured to operate the semiconductor switches of the at least one further switching unit such that a pre-determined continuous stream of pulses is applied when a fault condition is present. By applying pulses, the faulty semiconductor switch or an element arranged in series with the semiconductor switch such as a fuse can be blown off safely and in a controlled manner without damaging the semiconductor switches of the other switching units through which a current passes (which may be damaged if a current is present for a longer period of time).

The applied continuous pulsed stream may follow a high-frequency pulse pattern. The pulses may be pulse-width modulated. By means of the continuous stream of pulses, a pulsed current is created which burns the faulty semiconductor switch or an element arranged in series with the faulty semiconductor switch.

In some embodiments, a current is provided through the faulty semiconductor switch such that the faulty semiconductor switch is burned, thereby removing the faulty semiconductor switch. For example, if the faulty semiconductor switch had been short-circuited before being burned, there is an opened circuit after the faulty semiconductor switch has been burned. According to this embodiment, it is the faulty semiconductor switch itself which is burned.

In some embodiments, a series fuse is arranged in series with each of the semiconductor switches, wherein the current is provided such that the series fuse associated with the faulty semiconductor switch is burned in order to remove the faulty semiconductor switch. According to this embodiment, it is not the faulty semiconductor switch itself which is burned but a fuse arranged in series with the semiconductor switch.

Each semiconductor switch of a switching unit may be arranged in combination with an antiparallel diode. Such diodes give current that flows in the opposite direction a path to flow, thereby avoiding high voltage peaks eventually caused by inductive currents.

In some embodiments, the number of semiconductor switches arranged in parallel in the switching units is such that a level of redundancy is provided for. The idea of such a redundancy is to ensure that a switching unit can still operate normally after one of its semiconductor switches has been deactivated in accordance with the invention.

In some embodiments, the semiconductor switches of each leg of the power converter are controlled by a common gate driver (common for the semiconductor switches of that leg). The semiconductor switches of another leg are controlled by another common gate driver. This is convenient as the number of gate drivers can be limited in this way. However, in principle, the semiconductor switches may be driven by individual gate drivers. The gate drivers are controlled by the controller.

Generally, the semiconductor switches each comprise a control terminal (such as a Gate-Terminal in case of a MOSFET) which is controlled by the gate driver for the respective leg or, alternatively, by an individual gate driver.

In some embodiments, the current flowing through the faulty semiconductor switch is from the power source, wherein if the faulty semiconductor switch is from a top switching unit of one of the legs, the controller is configured to control the semiconductor switches of at least one of the bottom switching units of the other legs to be switched on such that the current flows through them; and if the faulty semiconductor switch is from a bottom switching unit of one of the legs, the controller is configured to control the semiconductor switches of at least one of the top switching units of the other legs to be switched on such that the current flows through them.

This embodiment regards the situation in which the power converter comprises an output which is coupled to an electric motor. When a fault is detected, the electric motor is stopped and not rotating anymore in this embodiment. Accordingly, the procedure of removing a faulty semiconductor switch takes place without the electric motor rotating. In such case, a high current from the power source may be provided for to burn the faulty semiconductor, wherein the current flows from one terminal of the power source through the faulty semiconductor switch and further through the semiconductor switches of at least one of the other switching units.

In this respect, a scheme is implemented in which complementary switching units are used for guiding the current, the term "complementary" referring to the top switching units and bottom switching units. For example, if the faulty semiconductor switch is from a top switching unit, the at least one other switching units through which the current flows is a bottom switching units. If the faulty semiconductor switch is from a bottom switching unit, the at least one other switching unit through which the current flows is a top switching units.

Preferably, when there are three legs of the power converter, the three legs providing for a three-phase alternating current, if the faulty semiconductor switch is from a top switching unit, the current flows through both of the bottom switching units, and if the faulty semiconductor switch is from a bottom switching unit, the current flows through both of the top switching units, thereby increasing the overall current and thus the heat transfer to the faulty semiconductor switch.

In some embodiments, the controller is configured to determine if one of the semiconductor switches has a fault condition in that it is configured to implement the following steps: determine if an error signal is received from one of the common gate drivers; in such case initially switch off all semiconductor switches of all switching units; subsequently determine the leg in which the faulty semiconductor switch is located by determining the common gate driver from which the signal has been received; after having identified the faulty leg in which the faulty semiconductor switch is located, apply a high frequency pulse train to the semiconductor switches of the bottom switching units of the other legs, and measure the current that flows through the top switching unit of the faulty leg; if a current flow is measured, choose the top switching unit to be the switching unit with the faulty semiconductor switch; otherwise, apply a high frequency pulse train to the semiconductor switches of the top switching units of the other legs, and measure the current that flows through the bottom switching unit of the faulty leg; and choose the bottom switching unit to be the switching unit with the faulty semiconductor switch if a current flow is measured; or apply this sequence in reverse order.

Accordingly, a scheme is implemented in which it is first determined by identification of the gate driver which provided an error signal in which leg the faulty semiconductor switch is located. Subsequently, to determine which of the two switching units of that leg is affected, it is tried to guide a current through the top switching unit of the faulty leg (the semiconductor switches of which are turned off) and the bottom switching units of the other legs (by applying a high frequency pulse train to the bottom switching units). If a current is detected, it must be from the faulty, short-circuited semiconductor switch. In such case, it is the top switching unit of the faulty leg in which the faulty semiconductor switch is arranged. If no current is detected, it is tried to guide a current through the bottom switching unit of the faulty leg and the top switching units of the other legs. If a current is detected, it must be from the faulty, short-circuited semiconductor switch. In this case, it is the bottom switching unit of the faulty leg in which the faulty semiconductor switch is arranged. Of course, the sequence may be reversed, i.e., it is first determined if a current is guided through the bottom switching unit of the faulty leg and the top switching units of the other legs.

In some embodiments, the power system comprises three legs, each leg comprising a top switching unit and a bottom switching unit, the three legs providing for a three phase alternating current under normal condition, wherein the current flowing through the faulty semiconductor switch is a short-circuit current resulting from the three phases being short-circuited, wherein the three phases are short-circuited in that: if the faulty semiconductor switch is from a top switching unit of one of the legs, the controller is configured to control the semiconductor switches of all top switching units of the other legs to be switched on; and if the faulty semiconductor switch is from a bottom switching unit of one of the legs, the controller is configured to control the semiconductor switches of all bottom switching units of the other legs to be switched on.

This embodiment regards the situation in which the power converter comprises an output which is coupled to an electric motor, but after a fault has been detected the electric motor still continues to rotate by means of another winding set of the electric motor or by means of another electric motor coupled to the same shaft. Such situation takes place in redundant systems that implement a multilane architecture in which each electric propulsion unit is powered by two power sources and/or each power source powers two electric propulsion units. Accordingly, even if the power converter is switched off, the electric motor to which the output of the power converter is coupled continues to rotate. In such a situation, when a failure happens the power converter is not able to completely disconnect from the power source and the winding will be kept energized.

In such case the invention provides that the power converter is short-circuited in that, if the faulty semiconductor switch is from a top switching unit, the other two top switching units are switched on and, if the faulty semiconductor switches from a bottom switching unit, the two other bottom switching units are switched on in order to short-circuit the three phases. In this embodiment, the faulty semiconductor switch is energized (burned) by the current flowing through the two other short-circuited semiconductor switches. This embodiment may also be referred to as a crowbar embodiment, as all three phases are short-circuited via the switches of the power converter.

In a refinement of that embodiment, the semiconductor switches of the switching unit that comprises the faulty semiconductor switch are controlled to be switched on intermittently. By alternating between on and off switching states of the switching unit that comprises the semiconductor switch (while at the same time the semiconductor switches of the two other switching units are switched on with a high frequency pulse train), heat can be generated in the faulty semiconductor switch in a controlled manner such that the faulty semiconductor switch is burned in a controlled manner.

In some embodiments (that regards the above discussed multilane situation), the controller is configured to determine if one of the semiconductor switches has a fault condition in that it is configured to: determine if an error signal is received from one of the common gate drivers; in such case initially switch off all semiconductor switches of all switching units; determine if an asymmetric fault current in the three phases is present and, if so, identify from the asymmetric fault current the faulty phase and the corresponding switching unit which comprises the faulty semiconductor switch.

This embodiment is based on the realization that an asymmetric fault current is created when one of the semiconductor switches fails and the corresponding switching unit is impaired, the reason being that if one of the switching units is short-circuited an unbalanced current flow takes place in the power converter. An asymmetric fault condition is present and a fault current is created which is unbalanced and significantly larger than a normal three-phase short-circuit current.

By implementing the above steps, it can be determined if the faulty semiconductor switch is from the top switching unit or from the bottom switching unit of the lane for which a fault condition has been indicated (by means of the respective gate driver). Based on this information, it can then be determined if the three phases are short-circuited by using the three top switching units or by using the three bottom switching units.

The semiconductor switches may be implemented as MOSFET, IGBT, GaN or SiC transistors in embodiments. The gate of such semiconductor switch is the control terminal to which a driver signal is applied.

In some embodiments, the power converter is an inverter which provides a three phase alternating current.

In a second aspect a method for servicing a power system in case of failure of a semiconductor switch is provided. The power system in which the method is carried out comprises a power bus comprising a first voltage rail and a second voltage rail, and a power converter arranged between the first voltage rail and the second voltage rail, wherein the power converter comprises a plurality of switching units, the switching units forming at least two legs, each leg comprising a top switching unit and a bottom switching unit, wherein the switching units each comprise a plurality of semiconductor switches arranged in parallel. The method comprises: receiving information or determine that one of the semiconductor switches of the switching units has a fault condition; switching off the semiconductor switches of the switching unit that comprises the faulty semiconductor at least intermittently; and switching on the semiconductor switches of at least one of the further switching units; thereby guiding a current through the faulty semiconductor switch and the semiconductor switches of the at least one further switching unit to remove the faulty semiconductor switch.

The method allows to service a power system by removing a faulty semiconductor switch without damaging the other components, thereby allowing to bring the power system back into operation.

In embodiments, the faulty semiconductor switch itself or a series fuse arranged in series with the faulty semiconductor switch is burned by the current. Further, it may be provided that the semiconductor switches of at least one further switching unit are operated by applying a pre-determined continuous stream of pulses when a fault condition is present.

In some embodiments which applies in the above discussed case that an associated electric motor stops running after a fault condition has been detected, the method further comprises: if the faulty semiconductor switch is from a top switching unit of one of the legs, switching on the semiconductor switches of at least one of the bottom switching units of the other legs such that the current flows through them; and if the faulty semiconductor switch is from a bottom switching unit of one of the legs, switching on the semiconductor switches of at least one of the top switching units of the other legs such that the current flows through them.

In such case, the following method may be implemented to determine that one of the semiconductor switches of the switching units has a fault condition: determine if an error signal is received from one of the common gate drivers; in such case initially switch off all semiconductor switches of all switching units; subsequently determine the leg in which the faulty semiconductor switch is located by determining the common gate driver from which the signal has been received; after having identified the faulty leg in which the faulty semiconductor switch is located, apply a high frequency pulse train to the semiconductor switches of the bottom switching units of the other legs, and measure the current that flows through the top switching unit of the faulty leg; if a current flow is measured, choose the top switching unit to be the switching unit with the faulty semiconductor switch; otherwise, apply a high frequency pulse train to the semiconductor switches of the bottom switching units of the other legs, and measure the current that flows through the top switching unit of the faulty leg; and choose the bottom switching unit to be the switching unit with the faulty semiconductor switch if a current flow is measured; or apply this sequence in reverse order.

In some embodiments which applies in the above discussed case that the associated electric motor does not stop running after a fault condition has been detected, and wherein the power system comprises three legs, each leg comprising a top switching unit and a bottom switching unit, the three legs providing for a three phase alternating current under normal condition, the method further comprises short-circuiting the three phases, wherein: if the faulty semiconductor switch is from a top switching unit of one of the legs, the semiconductor switches of all top switching units of the other legs are switched on; and if the faulty semiconductor switch is from a bottom switching unit of one of the legs, the semiconductor switches of all bottom switching units of the other legs are switched on.

In such case, the following method may be implemented to determine that one of the semiconductor switches of the switching units has a fault condition: determine if an error signal is received from one of the common gate drivers; in such case initially switch off all semiconductor switches of all switching units; determine if an asymmetric fault current in the three phases is present and, if so, identify from the asymmetric fault current the faulty phase and the corresponding switching unit which comprises the faulty semiconductor switch.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

The invention will be explained in more detail on the basis of exemplary embodiments with reference to the accompanying drawings in which:
FIG. 1 is an embodiment of a power system that implements a power converter that comprises six switching units arranged in three legs, each leg having a top switching unit and a bottom switching unit, wherein each of the switching units comprises a plurality of semiconductor switches arranged in parallel, and wherein in case one of the semiconductor switches has a fault a current is guided through the faulty semiconductor switch and two of the other switching units to burn of the faulty semiconductor switch;
FIG. 2 is the power system of FIG. 1, wherein a current is guided through a particular faulty semiconductor switch of the top switching unit of the first leg and the semiconductor switches of the bottom switching units of the two other legs;
FIG. 3 is an embodiment of a power system which is similar to the embodiment of FIG. 1 except that a series fuse is arranged in series with each of the semiconductor switches;
FIG. 4 is a flowchart of a method allowing to service a power system by removing a faulty semiconductor switch;
FIG. 5 is a flowchart of an embodiment indicating the current flow dependent on whether the faulty semiconductor switch is from a top switching unit or from a bottom switching unit;
FIG. 6 is a flowchart of an embodiment to determine a switching unit that comprises a faulty semiconductor switch;
FIG. 7 is the power system of FIG. 1, wherein a current is guided through a particular faulty semiconductor switch of the bottom switching unit of the first leg and the semiconductor switches of the bottom switching units of the two other legs;
FIG. 8 is the power system of FIG. 7, wherein the configuration of the semiconductor switches of the switching unit that comprises the faulty semiconductor switch has changed in that all switching units of that switching units are turned on;
FIG. 9 is a flowchart of a further embodiment indicating the current flow dependent on whether the faulty semiconductor switch is from a top switching unit or from a bottom switching unit;
FIG. 10 is a flowchart of a further embodiment to determine a switching unit that comprises a faulty semiconductor switch;
FIG. 11 indicates an electric distribution architecture in which the power system of the present invention may be implemented; and
FIG. 12 is a standard architecture of a power inverter.

### DETAILED DESCRIPTION

Initially, it is pointed out that in the following a power system is described by way of example that comprises a power converter which is implemented as a power inverter that changes a direct current to an alternating current. However, the principles of the present invention similarly apply to other kinds of power converters such as DC/DC converters and rectifiers.

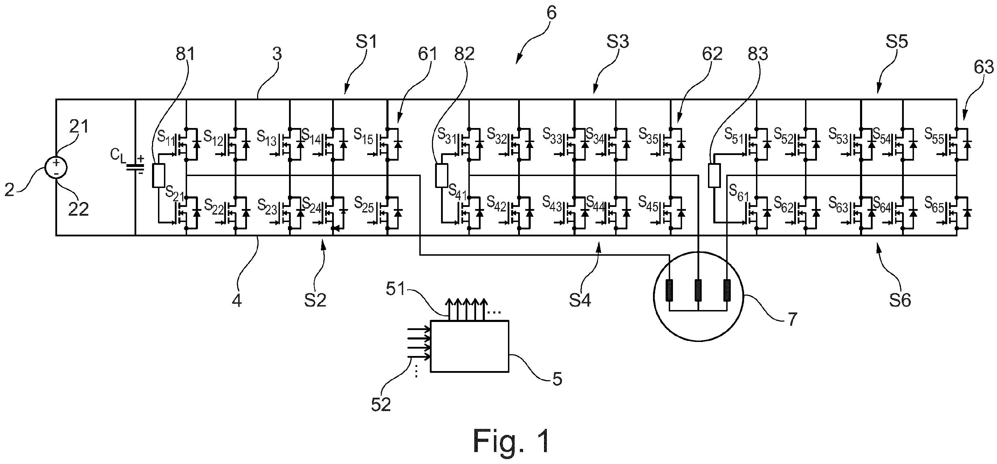

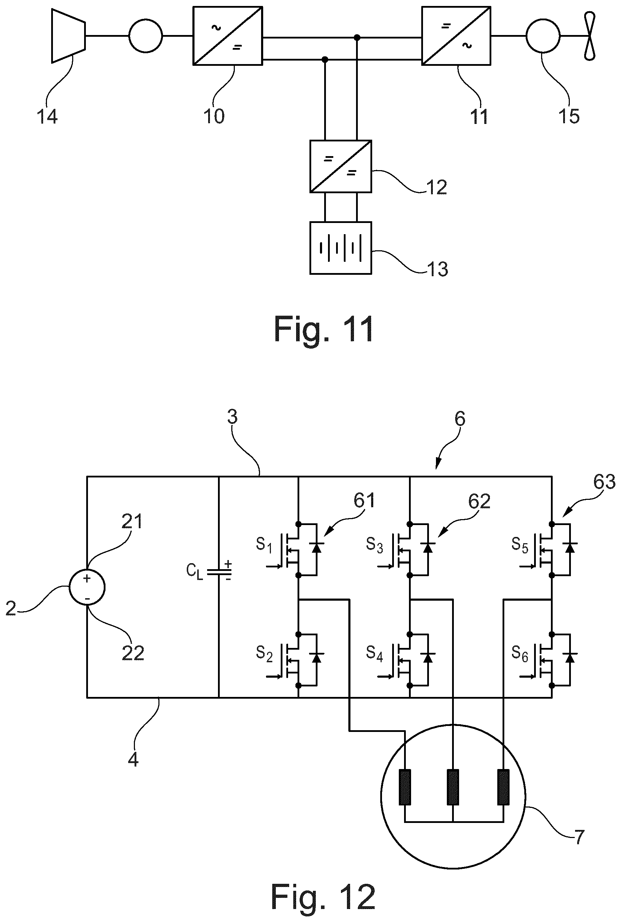

Before discussing embodiments of the present invention with respect to FIGS. 1 to 10, the background of the invention is discussed with respect to FIGS. 11 and 12 to provide for a better understanding of the present invention.

FIG. 11 depicts an electric distribution architecture which may be implemented in a hybrid aircraft power system. Two input sources are provided to provide power to a propulsion motor 15. One input source is a DC battery 13 which represents an energy storage system. The other input source is a turbo generator 14. A power inverter 11 is provided that supplies the propulsion motor 15 with a three phase alternating current. The power converter 11 receives direct current either from a DC/DC converter 12 coupled to the DC battery 13 or from a rectifier 10 coupled to the turbo generator 14 (or alternatively directly from the DC battery 13). The DC power system of the present invention may be implemented in the rectifier 10, the power inverter 11 and the DC/DC converter 12 in embodiments.

FIG. 12 shows a DC power system that comprises a DC power source 2 (such as a DC battery, or a DC/DC converter or a rectifier) that has a positive (first) terminal 21 and a negative (second) terminal 22. Between the positive terminal 21 and the negative terminal 22 a DC battery voltage is present. A positive (first) voltage rail 3 is connected to the positive terminal 21 and a negative (second) voltage rail 4 is connected to the negative terminal 22. The first/positive voltage rail 3 and the second/negative voltage rail 4 form a high-voltage bus.

The system further comprises a power converter 6. The power converter 6 comprises six switching units S1-S6 which are arranged in three parallel legs 61, 62, 63, wherein each leg comprises a top switching unit S1, S3, S5 connected to the positive voltage rail 3 and a bottom switching unit S2, S4, S6 connected to the negative voltage rail 4. Each leg 61, 62, 63 provides one phase of an alternating current which is provided to a load 7 such as an electric propulsion motor.

Further, a filtering capacitor C_{L} is arranged in parallel to the power converter 6 and extends between the positive voltage rail 3 and the negative voltage rail 4.

FIG. 12 shows a standard three-phase inverter circuit for motor drive applications as known to the skilled person such that it is refrained from providing further details. Also, it is pointed out that the circuit may comprise further elements such as gate drivers, control logic and a solid state power controller or a circuit braker.

FIG. 1 shows an embodiment of a DC power system in accordance with the principles of the present invention. Similar as in FIG. 12, the DC power system comprises a DC power source 2, a positive voltage rail 3, a negative voltage rail 4, a filtering capacitor C_{L} and a power converter 6 arranged between the positive voltage rail 3 and the negative voltage rail 4, the power converter 6 providing a three phase alternating current to a load 7 such as an electric motor.

The power converter comprises six switching units S1-S6 arranged in three parallel legs 61-63, each leg comprising a top switching unit S1, S3, S5 connected to the positive voltage rail 3 and a bottom switching unit S2, S4, S6 connected to the negative voltage rail 4. The difference in architecture with respect to the system of FIG. 12 lies in that each of the switching units S1-S6 is comprised of a plurality of semiconductor switches S11-S15, S21-S25, S31-S35, S41-S45, S51-S55, S61-S65 arranged in parallel. More particularly, switching unit S1 comprises semiconductor switches S11-S15, switching unit S2 comprises semiconductor switches S21-S25, etc.

It is pointed out that the number of five parallel semiconductor switches in the switching units S1-S6 is to be understood as an example only. The number of parallel semiconductor switches is determined by the current requirements.

The semiconductor switches S11-S15, S21-S25, S31-S35, S41-S45, S51-S55, S61-S65 may be a MOSFET (metal-oxide-semiconductor field-effect transistor), GaN (Gallium Nitride), SiC (Silicon Carbide) or IGBT (Insulated Gate Bipolar Transistor) switches. An antiparallel diode is provided for each semiconductor switch. Such antiparallel diode gives current that flows in the opposite direction a path to flow. Without such diodes, inductive currents would cease instantly, generating high voltage peaks.

The power system further comprises gate drivers 81-83 for the semiconductor switches S11-S15, S21-S25, S31-S35, S41-S45, S51-S55, S61-S65. In the depicted embodiment, but not necessarily, a separate common gate driver is provided for the semiconductor switches of each leg 61, 62, 63. Accordingly, e.g., gate driver 81 provides control signals to the control terminals of semiconductor switches S11-S15 and S21-S25. In other embodiments, there may be provided a separate gate driver for each switching unit S1-S6 or there may even be provided a separate gate driver for each semiconductor switch.

By implementing a plurality of parallel semiconductor switches for each switching unit S1-S6, it is easier to meet the power requirements, as the current capacity can be increased with each additional parallel semiconductor switch. However, switching devices may fail due to multiple reasons, such as overvoltage, EMI, high dv/dt, unequal current sharing, manufacturing defects, etc. With a large number of parallel semiconductor switches, there is an increased risk of failure of a semiconductor switch. However, the failure of a single semiconductor switch may lead to a complete shutdown of the power converter.

To address this problem, the DC power system of FIG. 1 implements a servicing method which allows to service the DC power system by removing a faulty semiconductor switch without damaging the other semiconductor switches.

To implement such function, the DC power system comprises a controller 5 which is depicted schematically. The controller comprises input lines 52 and output lines 51. In particular, the controller communicates 5 through input lines 52 and output lines 51 with the gate drivers 81-83 to receive information about the semiconductor switches and to provide control signals regarding which semiconductor switches are to be switched on and off by the gate driver.

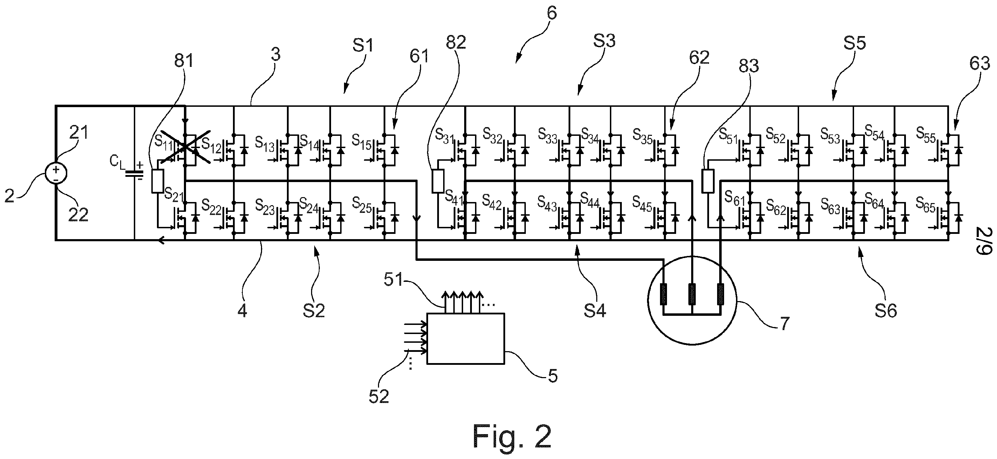

In particular, the controller 5 is configured to receive information or determine from the received information that one of the semiconductor switches of the switching units S1-S6 has a fault condition. This situation is considered in FIG. 2 which is identical to FIG. 1 except that a fault situation and current path to heal the fault situation are additionally indicated.

According to FIG. 2, as an example the situation is considered that switch S11 of switching unit S1 of leg 61 has a fault condition (such as being short-circuited). The information that one of the semiconductor switches has experienced a fault can be provided from gate driver 81 to controller 5. For example, gate driver 81 flags an error signal that is received by controller 5 through input lines 52. In other embodiments, there may be provided sensors associated with the semiconductor switches (such as thermal sensors) which provide information about a fault condition.

In case a fault condition of a semiconductor switch is detected (in the depicted example semiconductor switch S11), the controller 5 is configured to switch off all semiconductor switches of the switching unit that comprises the faulty semiconductor switch S11, which is switching unit S11 in the present case. Accordingly, semiconductor switches S11-S15 are switched off (by means of gate driver 81 receiving respective control signals from controller 5 through output lines 51).

At the same time, the controller 5 provides control signals to gate drivers 82, 83 to the effect that the switching units S4 and S6 are completely switched on, i.e., semiconductor switches S41-S45 and S61-S65 are switched on. This leads to the situation that a current from the DC power source 2 is guided through the faulty semiconductor switch S11 of switching unit S1 only and is further guided through all semiconductor switches S41-S45 and S61-S65 of switching units S4 and S6. As the current is concentrated on the faulty semiconductor switch S11 in switching unit S1, the faulty semiconductor switch S11 is burned by the current and, thereby, removed from the switching unit S1. In particular, a previous short-circuit of the semiconductor switch S11 is transformed by the burning into an open state of the semiconductor switch S11.

For removing the faulty semiconductor switch S11, the controller 5 may control the semiconductor switches S41-S45 and S61-S65 of switching units S4 and S6 such that a pre-determined continuous stream of pulses is applied when a fault condition is present. This allows the semiconductor switch S11 to be blown off safely without damaging the semiconductor switches S41-S45 and S61-S65.

The controller 5 may comprise a processor for executing instructions and a memory which is coupled to the processor and in which instructions are stored which, when executed by the processor, cause the processor to perform said functions of receiving information about the semiconductor switches and controlling the auxiliary switching instance and the semiconductor switches. The controller 5 may be a separate unit or may be integrated into other components such as a general control logic or a microcontroller of a solid state power controller. Also, the controller 5 may communicate with other control devices of the system.

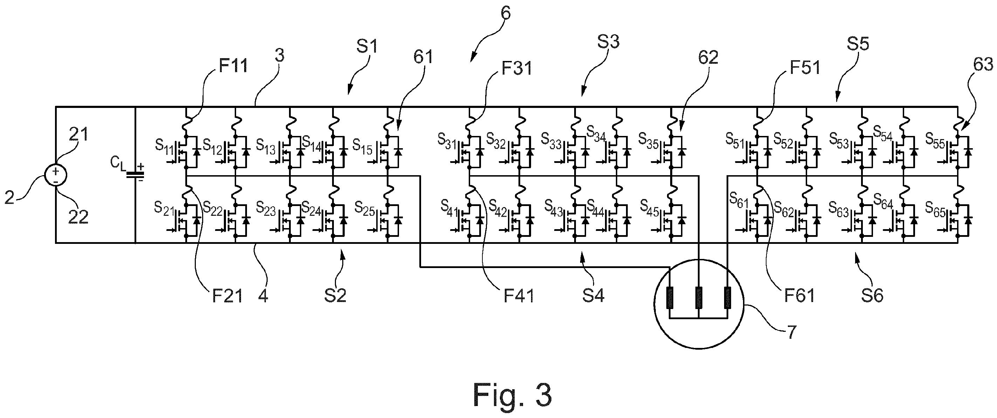

FIG. 3 depicts an embodiment which is similar to the embodiment of FIGS. 1 and 2 except that each of the semiconductor switches S11-S15, S21-S25, S31-S35, S41-S45, S51-S55, S61-S65 is arranged in series with a series fuse F11, F21, F31, F41, F51, F61, wherein for ease of depiction only some of the series fuses are indicated with a reference sign. In this embodiment, in case of a current through a faulty semiconductor switch, it is not the faulty semiconductor switch but the corresponding fuse which is burned.

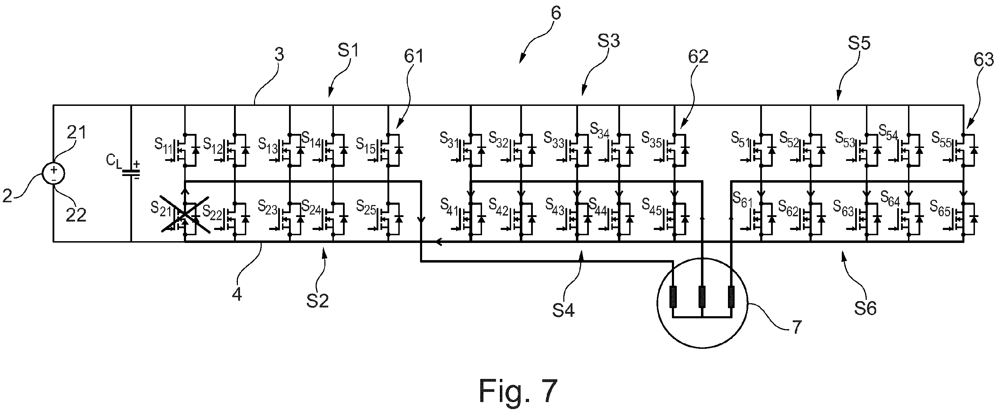

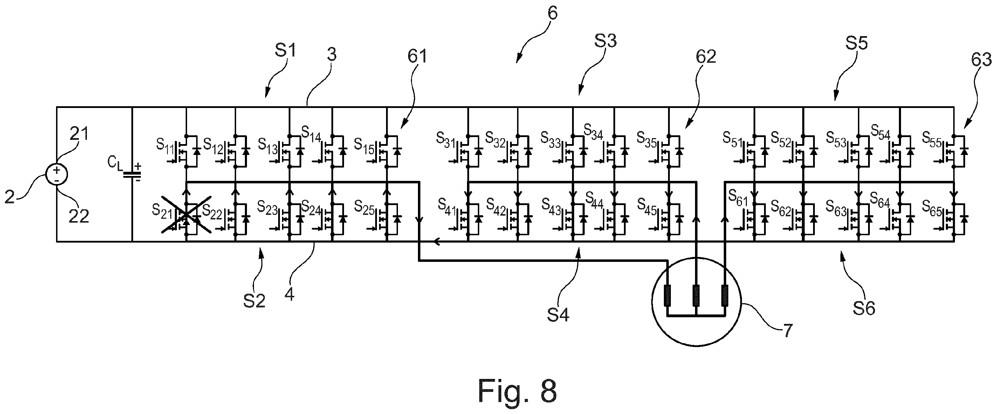

It is pointed out that in FIG. 3 for ease of depiction the controller 5 and the gate drivers 81-83 are not depicted. The same is true for the embodiments of FIGS. 7 and 8. Of course, these components are present just as described with respect to FIGS. 1 and 2.

Generally, in the embodiments of FIGS. 1 to 3, the situation is present in which the power converter 6 comprises an output which is coupled to an electric motor. When a fault is detected, the electric motor is stopped and not rotating anymore. Accordingly, the procedure of removing a faulty semiconductor switch takes place without the electric motor rotating.

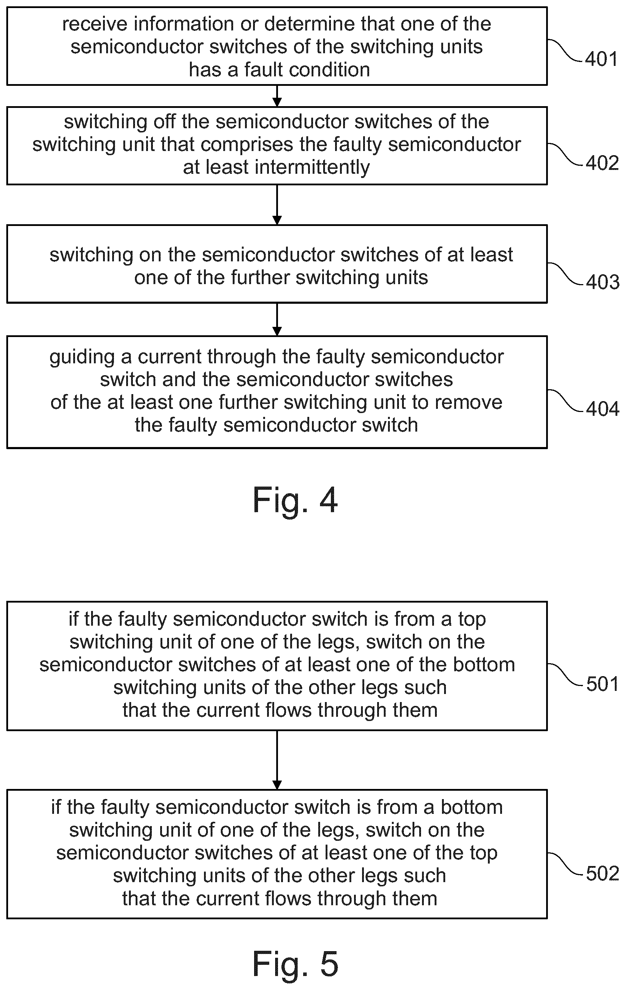

FIG. 4 is a flowchart of a method for servicing a power system, such as the power system of FIGS. 1 to 3. In step 401, information is received or determined that one of the semiconductor switches of the switching units has a fault condition. In such case, in step 402, the semiconductor switches of the switching unit that comprises the faulty semiconductor are switched off at least intermittently (wherein in FIGS. 1 to 3 the semiconductor switches are switched off during the complete procedure; switching them off intermittently regards an embodiment that will be discussed with respect to FIGS. 7 and 8).

At the same time, according to step 403, the semiconductor switches of the switching units through which a current shall flow are switched on. In consequence, according to step 404, a current is guided through the faulty semiconductor switch and the semiconductor switches of at least one further switching unit to remove the faulty semiconductor switch.

FIG. 5 regards an example of which switching units are chosen for guiding the current. FIG. 5 regards the embodiments of FIGS. 1 to 3. According to step 501, if the faulty semiconductor switch is from a top switching unit of one of the legs (such as of top switching unit S1 of leg 61 in FIG. 2), the semiconductor switches of at least one of the bottom switching units of the other legs are switched on such that the current flows through them (such as bottom switching units S4, S6 of legs 62, 63 in FIG. 2).

On the other hand, if the faulty semiconductor switch is from a bottom switching unit of one of the legs, the semiconductor switches of at least one of the top switching units of the other legs are switched on such that a current flows to them (inversely to the embodiment of FIG. 2).

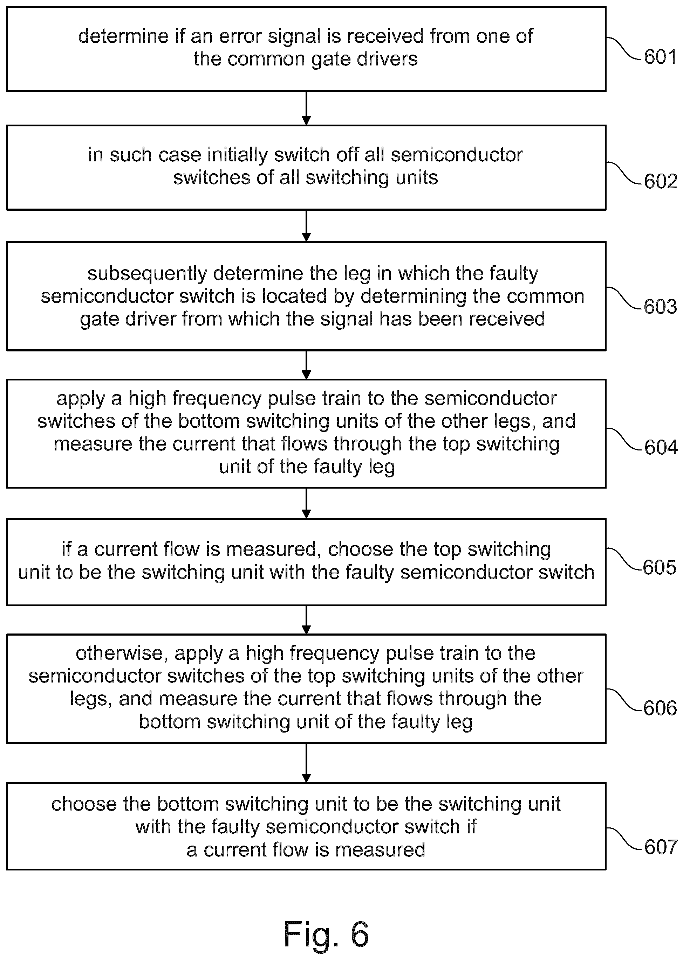

As discussed, it is initially determined that one of the semiconductor switches of the switching units has a fault condition, wherein the switching unit with the faulty semiconductor switch is determined. It is simple to make that determination if each semiconductor switch is associated with an individual gate driver: in such a situation, by knowing the gate driver which provides the respective error signal, the respective switching unit is also known. However, in embodiments such as the embodiments of FIGS. 1 to 3 where one common gate driver 81-83 is provided for all switching units of one leg, such determination is more complicated. FIG. 6 shows an example method to make such determination.

In step 601, it is determined if an error signal is received from one of the common gate drivers, such as gate drivers 81-83 in FIG. 1. In such case, initially all semiconductor switches of all switching units are switched off, step 602. Subsequently, it is determined in step 603 the leg in which the faulty semiconductor switch is located by determining the common gate driver from which the signal has been received. After having identified the faulty leg in which the faulty semiconductor switch is located (such as leg 61 in FIGS. 1 to 3), next is applied in step 604 a high frequency pulse train to the semiconductor switches of the bottom switching units of the other legs (such as bottom switching units S4, S4 in FIGS. 1 to 3). It is then measured in step 605 the current that flows through the top switching unit of the faulty leg. If the faulty semiconductor switch is in the top switching unit, a current will be measured (as the faulty semiconductor switch is short-circuited). In such case, the top switching unit is chosen/determined to be the switching unit with the faulty semiconductor switch.

Otherwise, in step 606, a high frequency pulse train is applied to the semiconductor switches of the top switching units of the other legs (such as S3, S5 in the embodiment of in FIGS. 1 to 3). It is then measured the current that flows through the bottom switching unit of the faulty leg (which would be switching unit S1 in the considered example). As the faulty semiconductor switch is not in the top switching unit of that leg (as has been determined in step 605), it can be expected that a current is now measured. If this is the case, in step 607 the bottom switching unit is chosen/determined to be the switching unit with the faulty semiconductor switch.

It is pointed out that such determination may be made in the reverse sequence alternatively, meaning that first a high frequency pulse train is applied to the semiconductor switches of the top switching units of the other legs.

Next, a slightly different scenario will be considered with respect to FIGS. 7 to 10. The power system of FIG. 7 is identical to the power system of FIG. 1. Accordingly, reference is made to the description of FIG. 1. The difference lies in the switching units which are chosen for providing a current to burn a faulty semiconductor switch. The difference is based on a different architecture in which the power system is embedded. More particularly, in the embodiments of FIGS. 7 to 10, the power converter comprises an output which is coupled to an electric motor, but after a fault has been detected the electric motor still continues to rotate by means of another winding set of the electric motor or by means of another electric motor coupled to the same shaft. Such situation takes place in redundant systems that implement a multilane architecture.

Therefore, even if the power converter 6 is switched off, the electric motor to which the output of the power converter is coupled continues to rotate. In such a situation, when a failure happens the power converter is not able to completely disconnect from the DC power source and the winding will be kept energized.

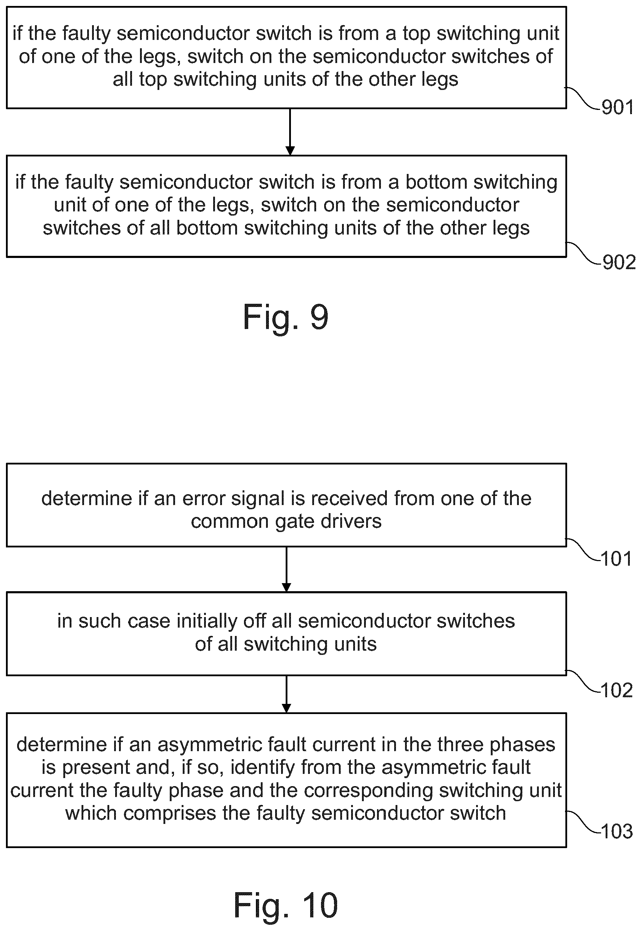

In such a situation, the three phases of the power converter are short-circuited. This is be referred to as crowbar embodiment, as all three phases are short-circuited via the switches of the power converter. More particularly, as indicated in step 901 of FIG. 9, if the faulty semiconductor switch is from a top switching unit of one of the legs, the semiconductor switches of all top switching units of the other legs are switched on. On the other hand, as indicated in step 902, if the faulty semiconductor switch is from a bottom switching unit of one of the legs, the semiconductor switches of all bottom switching units of the other legs are switched on.

This situation is depicted in FIG. 7. In FIG. 7, as an example the faulty semiconductor switch is semiconductor switch S21 of bottom switching unit S2 of leg 61. For short-circuiting, all semiconductor switches S41-S45 and S61-S65 of the two other bottom switching units S4, S6 of legs 62, 63 are switched on. A short-circuit current flows through faulty semiconductor switch S21 of switching unit S2 and through the other semiconductor switches of switching units S4, S6. Accordingly, regarding switching unit S2, the current is concentrated in faulty semiconductor switch S21, thereby burning the faulty semiconductor switch.

A variant of that embodiment is depicted in FIG. 8, the architecture of which is identical to the architectures in FIGS. 1 and 7. The difference of FIG. 8 compared to FIG. 7 lies in that the other, healthy semiconductor switches S22-S25 of the bottom semiconductor switch S2 that comprises the faulty semiconductor switch S21 are turned/switched on, such that the short-circuit current also flows through them. This is done intermittently, such that the current flows of FIGS. 7 and 8 alternate. Such alternation is associated with the advantage that heat can be provided to the faulty semiconductor switch in a controlled manner.

In the embodiment of FIGS. 7 and 8, there is also the problem to determine in which switching unit a semiconductor switch has failed. To make such determination, a method as depicted in FIG. 10 may be carried out, wherein, again, it is assumed that gate drivers are provided for the semiconductor switches of each leg, such as gate drivers 81 to 83 in FIG. 1. If there are individual gate drivers for the individual switching units or even the individual semiconductor switches, such determination can be made in a simple manner by considering from which gate driver an error signal has been received.

In FIG. 10, it is initially determined if an error signal is received from one of the common gate drivers (such as gate drivers 81 to 83), step 101. Next, in step 102, all semiconductor switches of all switching units S1-S6 are initially switched off. Subsequently, in step 103, it is determined if an asymmetric fault current in the three phases is present. An asymmetric fault current in the three phases is the result of an unbalanced current flow in the power converter 6 if one or more of the semiconductor switches are short-circuited. An asymmetric fault current is significantly larger than a normal three-phase short-circuit current. If an asymmetric fault current is present, it is identified from the asymmetric fault current the faulty phase and the corresponding switching unit which comprises the faulty semiconductor switch.

In an alternative embodiment, the power converter of the power system is a three-phase rectifier that provides for energy conversion from AC to DC.

In a further alternative embodiment, the power converter of the power system is a single phase AC converter, wherein switching units are provided which are arranged in two parallel legs.

It should be understood that the above description is intended for illustrative purposes only, and is not intended to limit the scope of the present disclosure in any way. Also, those skilled in the art will appreciate that other aspects of the disclosure can be obtained from a study of the drawings, the disclosure and the appended claims. All methods described herein can be performed in any suitable order unless otherwise indicated herein or otherwise clearly contradicted by context. Various features of the various embodiments disclosed herein can be combined in different combinations to create new embodiments within the scope of the present disclosure. In particular, the disclosure extends to and includes all combinations and sub-combinations of one or more features described herein. Any ranges given herein include any and all specific values within the range and any and all sub-ranges within the given range.

## Claims

1. A power system comprising:
a power bus (3, 4) comprising a first voltage rail (3) and a second voltage rail (4);
a power converter (6) arranged between the first voltage rail (3) and the second voltage rail (4), wherein the power converter (6) comprises a plurality of switching units (S1-S6), the switching units (S1-S6) forming at least two legs (61-63), each leg (61-63) comprising a top switching unit (S1, S3, S5) connected to the first voltage rail (3) and a bottom switching unit (S2, S4, S6) connected to the second voltage rail (4), wherein the switching units (S1-S6) each comprise a plurality of semiconductor switches (S11-S15, S21-S25, S31-S35, S41-S45, S51-S55, S61-S65) arranged in parallel; and
a controller (5) configured to receive information or determine that one of the semiconductor switches (S11-S15, S21-S25, S31-S35, S41-S45, S51-S55, S61-S65) of the switching units (S1-S6) has a fault condition;
wherein, in such case, the controller (5) is further configured to control the switching units (S1-S6) such that the semiconductor switches (S11-S15, S21-S25) of the switching unit (S1, S2) that comprises the faulty semiconductor switch (S11, S21) are switched off at least intermittently, and the semiconductor switches (S31-S35, S41-S45, S51-S55, S61-S65) of at least one of the further switching units (S3-S6) are switched on, wherein a current is guided through the faulty semiconductor switch (S11, S21) and the semiconductor switches (S31-S35, S41-S45, S51-S55, S61-S65) of the at least one of the further switching unit (S3-S6) to remove the faulty semiconductor switch (S11, S21).

2. The system of claim 1, wherein the controller (5) is configured to operate the semiconductor switches (S31-S35, S41-S45, S51-S55, S61-S65) of the at least one further switching unit (S3-S6) such that a pre-determined continuous stream of pulses is applied when a fault condition is present.

3. The system of claim 1 or 2, wherein the current is provided through the faulty semiconductor switch (S11, S21) such that the faulty semiconductor switch (S11, S21) is burned.

4. The system of claim 1 or 2, wherein a series fuse (F11, F21, F31, F41, F51, F61) is arranged in series with each of the semiconductor switches (S11-S15, S21-S25, S31-S35, S41-S45, S51-S55, S61-S65), wherein the current is provided such that the series fuse (F11) associated with the faulty semiconductor switch (S11) is burned in order to remove the faulty semiconductor switch (S11).

5. The system of any preceding claim, wherein the current flowing through the faulty semiconductor switch (S11, S21) is from the power source (2), wherein:
if the faulty semiconductor switch (S11, S21) is from a top switching unit (S1) of one of the legs (61), the controller (5) is configured to control the semiconductor switches of at least one of the bottom switching units (S4, S6) of the other legs (62, 63) to be switched on such that the current flows through them; and
if the faulty semiconductor switch (S11, S21) is from a bottom switching unit (S2) of one of the legs, the controller (5) is configured to control the semiconductor switches of at least one of the top switching units (S3, S5) of the other legs (62, 63) to be switched on such that the current flows through them.

6. The system of claim 5, wherein there are three legs (61-63) of the power converter (6), the three legs providing for a three-phase alternating current, wherein:
if the faulty semiconductor switch (S11, S21) is from a top switching unit (S1) of one of the legs (61), the controller (5) is configured to control the semiconductor switches of both bottom switching units (S4, S6) of the two other legs (62, 63) to be switched on; and
if the faulty semiconductor switch (S11, S21) is from a bottom switching unit (S2) of one of the legs (61), the controller (5) is configured to control the semiconductor switches of both top switching units (S3, S5) of the two other legs (62, 63) to be switched on.

7. The system of claim 5 or 6, wherein the semiconductor switches of each leg (61, 62, 63) of the power converter (6) are controlled by a common gate driver (81-83), and wherein the controller (5) is configured to determine if one of the semiconductor switches has a fault condition in that it is configured to:
determine if an error signal is received from one of the common gate drivers (81-83);
in such case initially switch off all semiconductor switches of all switching units (S1-S6);
subsequently determine the leg (61-63) in which the faulty semiconductor switch (S11, S21) is located by determining the common gate driver (81-83) from which the signal has been received;
after having identified the faulty leg (61) in which the faulty semiconductor switch (S11, S21) is located, apply a high frequency pulse train to the semiconductor switches of the bottom (S4, S6) switching units of the other legs (62, 63), and measure the current that flows through the top switching unit (S1) of the faulty leg (61);
if a current flow is measured, choose the top switching unit (S1) to be the switching unit with the faulty semiconductor switch (S11, S21);
otherwise, apply a high frequency pulse train to the semiconductor switches of the top switching units (S3, S5) of the other legs (62, 63), and measure the current that flows through the bottom switching (unit of the faulty leg; and
choose the bottom switching unit (S2) to be the switching unit with the faulty semiconductor switch (S11, S21) if a current flow is measured;
or apply this sequence in reverse order.

8. The system of any one of claims 1 to 4, wherein:
the power system comprises three legs (61-63), each leg comprising a top switching unit (S1, S3, S5) and a bottom switching unit (S2, S4, S6), the three legs (61-63) providing for a three phase alternating current under normal condition, wherein the current flowing through the faulty semiconductor switch (S11, S21) is a short-circuit current resulting from the three phases being short-circuited, wherein the three phases are short-circuited in that:
if the faulty semiconductor switch (S11, S21) is from a top switching unit (S1) of one of the legs (61), the controller (5) is configured to control the semiconductor switches of all top switching units (S3, S5) of the other legs (62, 63) to be switched on; and
if the faulty semiconductor switch (S11, S21) is from a bottom switching unit (S2) of one of the legs (61), the controller (5) is configured to control the semiconductor switches of all bottom switching units (S4, S6) of the other legs (62, 63) to be switched on.

9. The system of claim 8, wherein the semiconductor switches of each leg (61, 62, 63) of the power converter (6) are controlled by a common gate driver (81-83), and wherein the controller (5) is configured to determine if one of the semiconductor switches has a fault condition in that it is configured to:
determine if an error signal is received from one of the common gate drivers (81-83);
in such case initially switch off all semiconductor switches of all switching units (S1-S6); and
determine if an asymmetric fault current in the three phases is present and, if so, identify from the asymmetric fault current the faulty phase and the corresponding switching unit which comprises the faulty semiconductor switch (S11, S21).

10. A method for servicing a power system in case of failure of a semiconductor switch, wherein the power system comprises: a power bus (3, 4) comprising a first voltage rail (3) and a second voltage rail (4); and a power converter (6) arranged between the first voltage rail (3) and the second voltage rail (4), wherein the power converter (6) comprises a plurality of switching units (S1-S6), the switching units (S1-S6) forming at least two legs (61-63), each leg (61-63) comprising a top switching unit (S1, S3, S5) connected to the first voltage rail (3) and a bottom switching unit (S2, S4, S6) connected to the second voltage rail (4), wherein the switching units (S1-S6) each comprise a plurality of semiconductor switches (S11-S15, S21-S25, S31-S35, S41-S45, S51-S55, S61-S65) arranged in parallel;
the method comprising the steps of:
receiving (401) information or determining that one of the semiconductor switches (S11-S15, S21-S25, S31-S35, S41-S45, S51-S55, S61-S65) of the switching units (S1-S6) has a fault condition;
switching off (402) the semiconductor switches (S11-S15, S21-S25) of the switching unit (S1, S2) that comprises the faulty semiconductor switch (S11, S21) at least intermittently; and
switching on (403) the semiconductor switches (S31-S35, S41-S45, S51-S55, S61-S65) of at least one of the further switching units (S3-S6);
thereby guiding (404) a current through the faulty semiconductor switch (S11, S21) and the semiconductor switches (S31-S35, S41-S45, S51-S55, S61-S65) of the at least one of the further switching unit (S3-S6) to remove the faulty semiconductor switch (S11, S21).

11. The method of claim 10, wherein the faulty semiconductor switch (S11, S21) or a series fuse (F11, F21, F31, F41, F51, F61) arranged in series with the faulty semiconductor switch (S11, S21) is burned by the current.

12. The method of claim 10 or 11, wherein the method further comprises:
if the faulty semiconductor switch (S11, S21) is from a top switching unit (S1) of one of the legs (61), switching on (501) the semiconductor switches of at least one of the bottom switching units (S4, S6) of the other legs (62, 63) such that the current flows through them; and
if the faulty semiconductor switch (S11, S21) is from a bottom switching unit (S2) of one of the legs (61), switching on (502) the semiconductor switches of at least one of the top switching units (S3, S5) of the other legs (62, 63) such that the current flows through them.

13. The method of claim 12, wherein determining that one of the semiconductor switches of the switching units (S1-S6) has a fault condition comprises:
determine (601) if an error signal is received from one of the common gate drivers (81-83);
in such case initially switch off (602) all semiconductor switches of all switching units (S1-S6);
subsequently determine (603) the leg (61-63) in which the faulty semiconductor switch (S11, S21) is located by determining the common gate driver (81-83) from which the signal has been received;
after having identified the faulty leg (61) in which the faulty semiconductor switch (S11, S21) is located, apply (604) a high frequency pulse train to the semiconductor switches of the bottom (S4, S6) switching units of the other legs (62, 63), and measure the current that flows through the top switching unit (S1) of the faulty leg (61);
if a current flow is measured, choose (605) the top switching unit (S1) to be the switching unit with the faulty semiconductor switch (S11, S21);
otherwise, apply (606) a high frequency pulse train to the semiconductor switches of the top switching units (S3, S5) of the other legs (62, 63), and measure the current that flows through the bottom switching (S2) unit of the faulty leg; and
choose (607) the bottom switching unit (S2) to be the switching unit with the faulty semiconductor switch (S11, S21) if a current flow is measured;
or apply this sequence in reverse order.

14. The method of claim 10 or 11, wherein the power system comprises three legs (61-63), each leg comprising a top switching unit (S1, S3, S5) and a bottom switching unit (S2, S4, S6), the three legs (61-63) providing for a three phase alternating current under normal condition, wherein the method further comprises short-circuiting the three phases, wherein:
if the faulty semiconductor switch (S11, S21) is from a top switching unit (S1) of one of the legs (61), the semiconductor switches of all top switching units (S3, S5) of the other legs (62, 63) are switched on (901); and
if the faulty semiconductor switch (S11, S21) is from a bottom switching unit (S2) of one of the legs (61), the semiconductor switches of all bottom switching units (S4, S6) of the other legs (62, 63) are switched on (902).

15. The method of claim 14, wherein determining that one of the semiconductor switches of the switching units (S1-S6) has a fault condition comprises:
determine (101) if an error signal is received from one of the common gate drivers (81-83);
in such case initially switch off (102) all semiconductor switches of all switching units (S1-S6); and
determine (103) if an asymmetric fault current in the three phases is present and, if so, identify from the asymmetric fault current the faulty phase and the corresponding switching unit which comprises the faulty semiconductor switch (S11, S21).
